(19) Europäisches Patentamt
European Patent Office
Office européen des brevets

(11) **EP 1 737 934 B1**

(12) **FASCICULE DE BREVET EUROPEEN**

(45) Date de publication et mention de la délivrance du brevet:
**21.10.2009 Bulletin 2009/43**

(21) Numéro de dépôt: **05742728.8**

(22) Date de dépôt: **22.03.2005**

(51) Int Cl.:
***C10G 45/32*** *(2006.01)*

(86) Numéro de dépôt international:
**PCT/FR2005/000698**

(87) Numéro de publication internationale:
**WO 2005/108529 (17.11.2005 Gazette 2005/46)**

(54) **PROCEDE ET DISPOSITIF DE TRAITEMENT D'UNE CHARGE COMPORTANT DU BUTADIENE**

VERFAHREN UND VORRICHTUNG ZUR VERARBEITUNG EINES BUTADIENHALTIGEN EINSATZSTOFFS

METHOD AND DEVICE FOR PROCESSING A BUTADIENE-CONTAINING FEEDSTOCK

(84) Etats contractants désignés:
**AT BE BG CH CY CZ DE DK EE ES FI FR GB GR HU IE IS IT LI LT LU MC NL PL PT RO SE SI SK TR**

(30) Priorité: **09.04.2004 FR 0403822**

(43) Date de publication de la demande:
**03.01.2007 Bulletin 2007/01**

(73) Titulaire: **Institut Français du Pétrole**
**92852 Rueil Malmaison Cedex (FR)**

(72) Inventeurs:
• **LOURET, Sylvain**
**F-69007 Lyon (FR)**
• **COUPARD, Vincent**
**F-69120 Vaulx en Velin (FR)**
• **BONNEAU, Reynald**
**F-69100 Villeurbanne (FR)**

(56) Documents cités:
**EP-A- 0 122 367          EP-A- 0 982 280**
**EP-A- 1 217 060          WO-A-01/85656**
**US-A1- 2004 045 804**

**Description**

Domaine de l'invention

L'invention concerne le domaine des procédés et des installations pour le traitement d'une charge comportant du butadiène , des insaturés en C5+, et des composés acétyléniques, pour notamment l'élimination des acétyléniques et le fractionnement de la charge pour produire du butadiène. Le terme Cn+ se rapporte à des hydrocarbures à n atomes de carbone ou plus, mais peut aussi se rapporter à des hydrocarbures à n atomes de carbone exclusivement (Cn).

Art antérieur

Il est connu de la demande de brevet européenne EP 1 217 060 d'envoyer une charge dans une étape de distillation dans laquelle on récupère une coupe C4 comportant sensiblement tout le butadiène, une coupe C5+, et une fraction riche en composés acétyléniques par soutirage latéral, de traiter la fraction riche en composés acétyléniques dans une étape d'hydrogénation, et de recycler un effluent appauvri en composés acétyléniques issu de l'étape d'hydrogénation dans l'étape de distillation.

Il existe un besoin de parvenir à hydrogéner, avec une sélectivité améliorée, les composés acétyléniques contenus dans ce type de charge, et ceci dans des conditions ou le catalyseur d'hydrogénation ne se désactive que très lentement.

Il existe également un besoin de limiter les pertes en butadiène liées à la distillation et l'hydrogénation d'une charge très riche en butadiène.

Description sommaire de l'invention

L'amélioration apportée par la présente invention porte principalement sur la mise en oeuvre d'une distillation comportant une étape de pré-fractionnement de la charge, et d'une étape de fractionnement complémentaire dans une zone séparée de la zone de l'alimentation du pré-fractionnement, permettant le soutirage d'un courant à hydrogéner débarrassé d'une partie notable des polluants des catalyseurs d'hydrogénation.

L'amélioration porte également sur le fait que l'étape d'hydrogénation porte sur une fraction riche en composés acétyléniques et pauvre en C5+

Description détaillée de l'invention

L'invention concerne un procédé de traitement d'une charge comprenant des composés acétyléniques, du butadiène, et une fraction C5+ comprenant des composés diéthyléniques et/ou acétyléniques, par exemple du pentadiène et/ou du cyclopentadiène, dans lequel on envoie la charge dans une étape de distillation, on récupère une coupe C4 comportant sensiblement tout le butadiène, on récupère une coupe enrichie en C5+, et on produit une fraction prélevée comprenant des composés acétyléniques, on traite au moins une partie de la fraction enrichie en composés acétyléniques dans au moins une étape d'hydrogénation, et on recycle un effluent appauvri en composés acétyléniques issu de l'étape d'hydrogénation dans l'étape de distillation.

Un des objets du procédé de l'invention est d'hydrogéner sélectivement les composés acétyléniques contenus dans la charge en présence d'hydrogène en minimisant la désactivation du catalyseur d'hydrogénation par des oligomères, polymères, et leurs précurseurs.

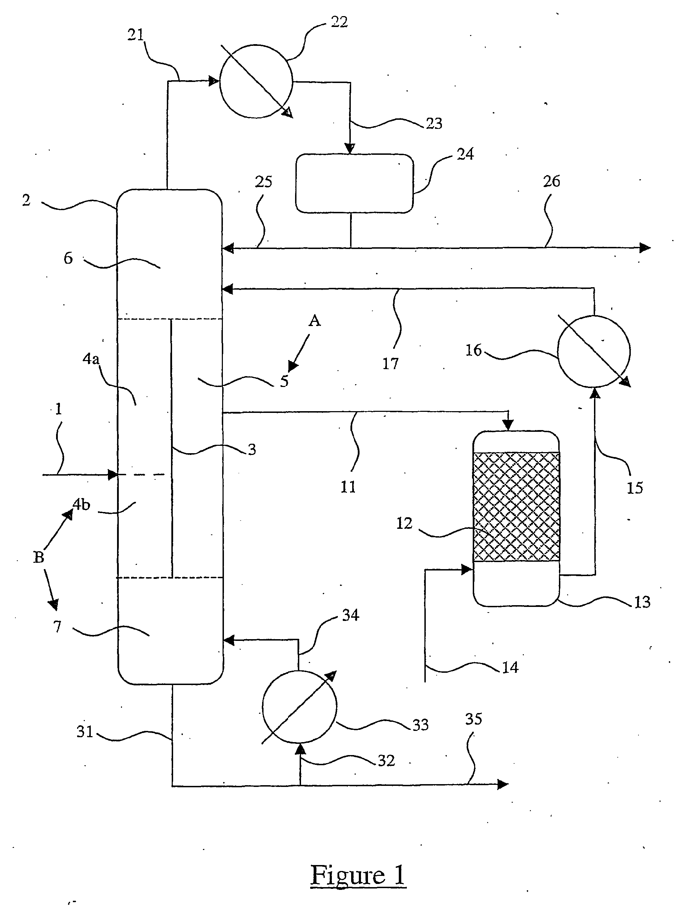

Un autre objet du procédé de l'invention est de purifier de façon poussée (notamment élimination poussée d'acétyléniques) une charge qui peut être très riche en butadiène, sans réduire sensiblement la durée de cycle du catalyseur d'hydrogénation, tout en minimisant au maximum les pertes en butadiène. L'invention est décrite ci-après avec des références qui se rapporte à la figure 1.

Il a été trouvé un procédé de traitement d'une charge comprenant des composés acétyléniques, du butadiène, et une fraction C5+ comprenant des composés diéthyléniques et/ou acétyléniques, par exemple du pentadiène et/ou du cyclopentadiène, dans lequel :

  i) on envoie la charge dans une étape de distillation, on récupère une coupe C4 comportant sensiblement tout le butadiène, on récupère une coupe enrichie en C5+ et on produit une fraction prélevée comprenant des composés acétyléniques,

  ii) on traite au moins une partie de ladite fraction prélevée dans au moins une étape d'hydrogénation, et

  iii) on recycle un effluent appauvri en composés acétyléniques issu de l'étape d'hydrogénation dans l'étape de distillation,

  caractérisé en ce que l'étape de distillation comporte :

- une étape initiale de pré-fractionnement de la charge, qui est alimentée dans une zone de pré-fractionnement (4a, 4b, 6, 7) comprise dans une colonne de distillation, pour obtenir à un ou plusieurs niveaux intermédiaires de la colonne au moins un courant intermédiaire à teneur réduite en C5+, et

- au moins une étape de fractionnement par distillation de ce ou ces courant(s) intermédiaire(s), mise en oeuvre dans une zone de fractionnement complémentaire dont une partie A (5) au moins est distincte et non adjacente à la partie B (4b, 7) de la zone de pré-fractionnement constituée par le plateau l'alimentation de la charge et les plateaux inférieurs, pour soutirer la fraction prélevée à partir d'un point de A pour lequel le rapport molaire [C4 / C5+] est plus élevé que celui de la charge.

Selon l'invention, on considère que la partie A est "distincte et non adjacente" à la partie B, si A et B sont disjointes et n'ont donc pas de partie commune, et si un plateau de A est séparé d'un plateau de B qui est au dessus ou en dessous de lui par au moins 1 plateau théorique. Ceci s'applique aussi à des plateaux de A et B situés au même niveau mais de part et d'autre d'une cloison verticale dans la colonne. Les plateaux étant séparés par ladite cloison et n'étant pas l'un au dessus de l'autre, ils peuvent donc être considérés "non adjacents". Il n'y a pas nécessairement de séparation matérielle telle qu'une cloison entre A et B. Les "plateaux inférieurs" sont les plateaux sur lesquels le liquide du plateau d'alimentation (recevant la partie liquide de la charge) s'écoule, en cascade. Ces plateaux inférieurs ne comprennent donc pas des plateaux situés à un niveau inférieur à celui de l'alimentation de la charge, mais dans une zone isolée de cette alimentation.

L'invention permet donc d'opérer un fractionnement en deux étapes, dans lequel la deuxième étape est au moins en partie réalisée dans une zone bien distincte et non adjacente à la zone d'alimentation de la charge. Cette séparation, ou cet éloignement, évite la dilution des produits circulant dans cette zone par les impuretés présentes dans l'alimentation. Il est en effet fréquent que la charge contienne des produits indésirables pour le catalyseur d'isomérisation: traces d'oligomères et de polymères, composés relativement lourds diéthyléniques et/ou acétyléniques en C5+ susceptibles de former des produits plus lourds additionnels (oligomères et polymères), voire même de petites quantités de particules solides de coke.

Selon l'invention, tous ces composés indésirables relativement lourds vont avoir tendance à refluer vers le bas de la zone de pré-fractionnement, et donc à descendre dans la partie B de cette zone (partie comprenant le plateau d'alimentation et les plateaux en dessous (en communication de liquide avec ces plateaux)), pour finalement sortir en fond de colonne. La mise en oeuvre d'une zone de fractionnement complémentaire dont une partie A est distincte et non adjacente à B permet de soustraire A, au moins en partie, à l'influence des composés indésirables précités, notamment oligomères et polymères qui descendent en majorité dans la zone B.

Le soutirage, à partir de A, en un point tel que le rapport molaire C4/C5+ est supérieur à celui de la charge permet de limiter la présence de composés indésirables en C5+ précurseurs d'oligomères et polymères. Cela permet donc d'envoyer à l'hydrogénation un produit comprenant une quantité réduite de polluants susceptibles de dégrader l'efficacité et du catalyseur d'hydrogénation. Les catalyseurs d'hydrogénation sont en effet typiquement inhibés par des quantités notables d'oligomères ou de polymères, ou de leurs précurseurs notamment diéthyléniques et acétyléniques les plus lourds.

Le catalyseur, moins pollué, est plus efficace, typiquement plus sélectif (pour l'hydrogénation des acétyléniques en préservant au mieux le butadiène, notamment du fait qu'il peut fonctionner dans les conditions opératoires sensiblement optimales sans devoir compenser la désactivation par modification des conditions opératoires), et a une durée de vie accrue. Il permet aussi d'obtenir une purification plus poussée, avec de plus faibles pertes en butadiène.

De façon très préférée, la fraction prélevée est soutirée à un niveau de la colonne plus élevé que le point d'alimentation de la charge. Ceci contribue à augmenter fortement le rapport C4/C5+ de la fraction prélevée.

Typiquement, le recyclage de l' effluent appauvri en composés acétyléniques issu de l'étape d'hydrogénation est réalisé à un niveau de la colonne de distillation situé au dessus du niveau de soutirage de la fraction prélevée, et au dessus des parties A et B. Par "au dessus", on entend selon l'invention que le recyclage non seulement est réalisé à un niveau plus élevé, mais également qu'il provoque un reflux interne de liquide dans les deux zones A et B (typiquement en parallèle ou en série). Ainsi, ce recyclage provoque une absorption des acétyléniques, que l'on fait refluer vers le bas de la colonne, pour obtenir un effet de concentration de ces acétyléniques dans la fraction prélevée. Corrélativement, la coupe comprenant le butadiène en tête de colonne ne contient que très peu d'acétyléniques. Le point de soutirage de cette fraction prélevée peut avantageusement se situer au point de concentration maximale des acétyléniques, en particulier du vinyl-acétylène, ou à proximité de ce point.

Selon une première variante de l'invention, la partie A est constituée par un tronçon de ladite colonne situé au dessus de l'alimentation de la charge (typiquement plusieurs plateaux théoriques au dessus). Par exemple, si la colonne comprend 45 plateaux théoriques, et que l'on alimente la charge au plateau 25, on pourra soutirer une fraction prélevée au plateau 20 et la recycler après hydrogénation au plateau 10.

La partie B est alors constituée par les plateaux 25 à 45. On peut alors définir une partie A distincte et non adjacente à B, qui est constituée (par exemple) par les plateaux 14 à 21. La zone de fractionnement complémentaire est typiquement constituée dans ce cas par les plateaux 1 à 21, et la zone de pré-fractionnement par les plateaux 22 à 45.

Selon une deuxième variante de l'invention, la colonne de distillation comporte une partition disposée de manière à séparer la partie A de la zone de fractionnement complémentaire, de la zone B, et en ce que la zone de pré-fractionnement (4a, 4b, 6, 7) et la zone de fractionnement complémentaire (5, 6, 7) comprennent au moins une section commune (6, 7).

Typiquement, la partition est disposée dans une partie centrale de la colonne, de manière à ménager une section commune (6) en tête de colonne et une section commune (7) en fond de colonne,

- la coupe C4 comportant sensiblement tout le butadiène est récupérée dans la section commune (6) en tête de colonne,
- la coupe enrichie en C5+ est récupérée dans la section commune (7) en fond de colonne, et
- la fraction prélevée est produite dans ladite partie A (5) de la zone de fractionnement complémentaire, au niveau de la partie centrale de la colonne, qui est isolée de l'alimentation. Cette variante de l'invention permet d'obtenir un rapport C4/C5+ élevé pour la fraction prélevée: En effet, il sort des zones 4a et 4b du pré-fractionnement qui sont adjacentes à l'alimentation un "courant intermédiaire", précité, qui est un courant vapeur très pauvre en C5+ (en tête de la zone 4a), et un courant liquide plus riche en C5+ (en bas de 4b), ce courant étant efficacement rectifié dans la partie A (5), pour l'élimination de la majeure partie des C5+ qu'il contient. La variante de l'invention avec une partition interne permet donc d'obtenir un rapport C4/C5+ élevé pour la fraction prélevée sans augmenter sensiblement la hauteur totale de la colonne (contrairement à la variante ou la zone A est un tronçon de colonne superposé, situé plusieurs plateaux au dessus de l'alimentation. De plus, elle permet typiquement de diminuer le taux de reflux, par exemple d'environ 20%.

L'étape d'hydrogénation est mise en oeuvre en présence d'hydrogène, dans un lit de catalyseur, par exemple à base de palladium/or, ou palladium/argent, ou de tout autre catalyseur d'hydrogénation sélective connu. Le choix du catalyseur n'est pas un élément essentiel de l'invention.

L'invention peut également être mise en oeuvre selon plusieurs variantes additionnelles ou dispositions techniques:

La fraction prélevée peut notamment être récupérée par soutirage latéral dans la moitié supérieure de ladite partie A (5) de la zone de fractionnement complémentaire.

Selon une autre variante, le courant intermédiaire est directement envoyé sur un lit de catalyseur en présence d'hydrogène localisé dans ladite partie A de la zone de fractionnement complémentaire, au-dessous du plateau théorique supérieur de ladite partie A, par exemple dans la moitié supérieure de la partie A. Ceci permet une conception très compacte et intégrée de l'invention permettant d'éviter des transferts de fluide.

Typiquement, l'effluent appauvri en composés acétyléniques est recyclé dans la section commune en tête de colonne, de préférence plusieurs plateaux théoriques (3 à 15 par exemple) au dessus des zones A et B, afin de réaliser un bon reflux des composés acétyléniques. Ceci permet d'obtenir une élimination poussée des acétyléniques.

L'invention concerne également un dispositif pour la mise en oeuvre du procédé, et notamment un dispositif de traitement d'une charge comprenant des composés acétyléniques, du butadiène, et une fraction C5+ comprenant des composés diéthyléniques et/ou acétyléniques comprenant :

- des moyens (1) d'alimentation de la charge,
- des moyens de distillation (2) pourvus de moyens (24, 26) de récupération d'une coupe C4 comportant sensiblement tout le butadiène, et de moyens (31, 35) de récupération d'une coupe enrichie en C5+, les moyens de distillation permettant régalement la production d'une fraction prélevée comprenant des composés acétyléniques,
- des moyens d'hydrogénation (12, 13) de la fraction prélevée, et
- des moyens de recyclage (17) dans les moyens de distillation d'un effluent appauvri en composés acétyléniques provenant des moyens d'hydrogénation,

caractérisé en ce que les moyens de distillation comportent :

- au moins une colonne de distillation présentant une zone de pré-fractionnement, (4a, 4b, 6, 7) reliée aux moyens d'alimentation de la charge, produisant à au moins un niveau intermédiaire de la colonne au moins un courant intermédiaire comprenant des composés acétyléniques et
- des moyens de transfert d'au moins un courant intermédiaire à teneur réduite en C5+, produit dans la zone de pré-fractionnement, vers au moins une zone de fractionnement complémentaire (5, 6, 7) dont une partie A (5) au moins est distincte et non adjacente à la partie B (4b, 7) de la zone de pré-fractionnement constituée par le plateau l'alimentation de la charge et les plateaux inférieurs, la partie A comprenant également des moyens de soutirage de la fraction prélevée à partir d'un point de A pour lequel le ratio molaire [C4 / C5+] est plus élevé que celui de la charge, ces moyens de soutirage étant reliés aux moyens d'hydrogénation.

Un tel dispositif, utilisé de préférence avec une mise en oeuvre selon l'une ou plusieurs des dispositions de procédé précitées (par exemple recyclage de l'effluent d'hydrogénation au dessus (et de préférence de 3 à 15 plateaux théoriques au dessus des zone A et B)), permet d'obtenir les avantages décrits pour le procédé selon l'invention.

La colonne peut comprendre, dans certaines ou toutes les zones, du garnissage, structuré ou non, à la place des plateaux, qui constitue un équivalent technique de ces plateaux.

Lorsque la colonne comprend une partition, cette partition peut être essentiellement constituée par une paroi, ou cloison interne. Cette paroi interne peut s'étendre le long d'un axe parallèle à l'axe longitudinal de la colonne de distillation. Cette paroi interne peut être essentiellement verticale ou inclinée avec un angle par rapport à la verticale inférieure à 45°.

La partition peut être également constituée par des parois internes disposées entre chaque plateau sur une section de la colonne.

La colonne de distillation peut comporter typiquement un nombre total de plateaux (sauf mention contraire, de plateaux théoriques, comptés depuis la tête de colonne) compris entre 20 et 50, de préférence entre 35 et 45.

La zone de pré-fractionnement et la zone de fractionnement complémentaire peuvent comporter typiquement un même nombre ou un nombre différent de plateaux théoriques. La zone de pré-fractionnement ou la zone de fractionnement complémentaire peuvent généralement comporter entre 4 et 15, de préférence entre 9 et 12 plateaux théoriques qui sont séparés et non en commun.

La section commune en tête de colonne peut comporter entre 1/3 et 2/3 du nombre total de plateaux théoriques. Par exemple, elle peut comporter de 10 à 30, de préférence de 12 à 25 plateaux théoriques.

La section commune en fond de colonne peut, quant à elle, comporter le plus souvent de 2 à 10 plateaux théoriques.

La charge peut être une fraction d'un effluent de vapocraquage comportant en majorité des hydrocarbures ayant entre 4 et 5 atomes de carbone, de préférence en majorité 4 atomes de carbone.

En particulier, la charge peut comporter au moins 50 % en poids, de préférence 70 % en poids, de manière plus préférée 90 % en poids d'hydrocarbures ayant entre 4 et 5 atomes de carbones, voire 4 atomes de carbone.

Le débit de soutirage de la fraction prélevée comprenant des acétyléniques peut être avantageusement maintenu à une valeur sensiblement égale à celle du débit d'alimentation de la charge. Par exemple, le débit de soutirage de cette fraction prélevée peut être maintenu entre 70 % et 130 % de la valeur du débit de la charge, de préférence entre 90 % et 110 % de la valeur du débit de la charge.

Il peut être avantageux de contrôler la température du recyclage (notamment de le refroidir) afin de ne pas perturber la colonne par des variations locales de température importantes.

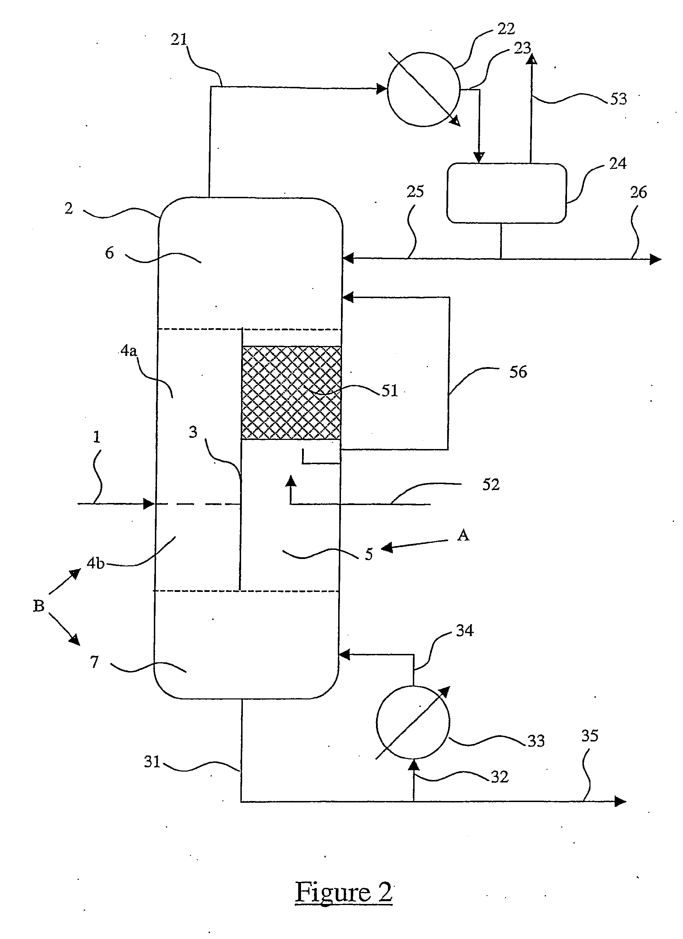

Pour une meilleure compréhension, deux modes de réalisation du procédé de l'invention sont illustrés par les figures 1 et 2. Ces modes de réalisation sont donnés à titre d'exemple et ne présentent aucun caractère limitatif. Ces illustrations du procédé de l'invention ne comportent pas l'ensemble des composantes nécessaires à sa mise en oeuvre. Seuls les éléments nécessaires à la compréhension de l'invention y sont représentés, l'homme du métier étant capable de compléter ces représentations pour mettre en oeuvre l'invention.

Dans la Figure 1, la charge est alimentée par une conduite (1) dans une colonne de distillation (2) comportant une zone de pré-fractionnement (6, 4a, 4b, 7), une zone de fractionnement complémentaire (6, 5, 7), et une partition (3) disposée en partie centrale de manière à séparer une partie (4a, 4b) de la zone de pré-fractionnement du côté de l'alimentation de la charge, d'une partie A (5) de la zone de fractionnement complémentaire. La partition (3) est disposée dans la colonne (2) de manière à ménager une section commune (6) en tête de colonne et une section commune (7) en fond de colonne, entre les deux zones de fractionnement précitées.

Un courant intermédiaire à teneur réduite en C5+ (par rapport à la charge), sort sous forme vapeur du plateau supérieur de la zone 4a, et alimente la zone de fractionnement complémentaire (6, 5, 7) au niveau du plateau inférieur de la zone commune (6). Le liquide de ce plateau est réparti entre les zones (4a) et (5). Le courant vapeur issu du plateau supérieur de la zone commune (7) se répartit également, entre les zones (4b) et (5).

Une fraction riche en composés acétyléniques, produite dans la partie A (5) de la zone de fractionnement complémentaire, est prélevée par une conduite de soutirage latéral (11) avant d'être envoyée dans un lit de catalyseur d'hydrogénation (12) à l'intérieur d'un réacteur d'hydrogénation (13). Le lit de catalyseur est un lit fixe à écoulement descendant, c'est à dire que la fraction prélevée est introduite par le haut dans le réacteur d'hydrogénation. De l'hydrogène est injecté dans le réacteur d'hydrogénation par une conduite (14). Un effluent appauvri en composés acétyléniques est récupéré par une conduite (15). Cet effluent appauvri en composés acétyléniques est refroidi dans un échangeur de chaleur (16) avant d'être recyclé dans la section commune 6 en tête de la colonne de distillation (2), par l'intermédiaire d'une conduite (17).

En tête de la colonne (2), on récupère également, par l'intermédiaire d'une conduite (21), une coupe C4 comportant sensiblement tout le butadiène. Cette coupe est ensuite envoyée via la conduite (21) dans un condenseur (22), puis dans un séparateur (24) via une conduite (23). Une partie de cette coupe C4 est envoyée dans la colonne (2), sous forme de reflux, par une conduite (25). L'autre partie de la coupe C4 est récupérée par la conduite (26).

En fond de la colonne (2), on récupère, par l'intermédiaire d'une conduite 31, une coupe C5 enrichie en oligomères. Une partie de cette coupe C5 est envoyée, par l'intermédiaire d'une conduite (32) dans un rebouilleur (33) avant d'être recyclée en fond de la colonne par une conduite (34). L'autre partie de la coupe C5 est récupérée par une conduite (35).

Dans la Figure 2 on retrouve un certain nombre d'éléments de la Figure 1 décrits précédemment. On retrouve, en particulier, les éléments (1 à 7), (21 à 26) et (31 à 35) représentés à la Figure 1.

A la différence de la Figure 1, la fraction comprenant des composés acétyléniques produite dans la partie supérieure de la partie A (5) de la zone de fractionnement complémentaire est directement envoyée dans un lit de catalyseur d'hydrogénation (51), ce lit étant localisé dans la partie A interne à la colonne, et non pas à l'intérieur d'un réacteur d'hydrogénation séparé.

Le lit de catalyseur est un lit fixe à écoulement descendant, c'est à dire que la fraction enrichie en composés acétyléniques est introduite par le haut du lit de catalyseur (51).

De l'hydrogène est injecté, par le bas, dans le lit de catalyseur d'hydrogénation (51) par l'intermédiaire d'une conduite (52). Un effluent liquide appauvri en composés acétyléniques est récupéré en dessous du lit de catalyseur (51), et une partie de cet effluent est recyclée (en utilisant une pompe non représentée) par la ligne (56) au dessus des zones (4a, 4b et 5) (par exemple 4 ou 5 plateaux théoriques au dessus), pour augmenter le reflux interne pauvre en acétyléniques, dans les parties A (5) et B (4b, 7) de la colonne.

En tête de la colonne (2), on récupère, par l'intermédiaire la conduite (21), sensiblement tout le butadiène. Cette coupe est ensuite envoyée via la conduite (21) dans le condenseur (22), puis dans le séparateur (24) via la conduite (23). Le séparateur (24) est surmonté par une conduite (53) permettant la purge de l'hydrogène excédant. Une partie du butadiène est envoyée dans la colonne (2), sous forme de reflux, par une conduite (25). L'autre partie du butadiène est récupérée par la conduite (26).

<u>Exemple 1 (selon l'art antérieur)</u>

Une charge C4+C5 issue d'effluents de vapocraquage, dont la composition est décrite dans le tableau 1 ci-dessous, est traitée conformément au procédé de l'art antérieur (EP1217060A1). La charge est introduite dans une colonne de distillation à une température de 64°C, une pression de 0,60 MPa et un débit de 30 T/h.

Cette colonne comporte environ 40 plateaux théoriques (entre 50 et 120 plateaux réels selon le type de plateaux) et la charge est introduite au niveau du 20$^{\text{ème}}$ plateau (théorique). La colonne est maintenue à une pression de 0,50 MPa en tête et de 0,53 MPa en fond. La température dans la colonne est maintenue à 45°C en tête et à 95°C en fond.

En tête de colonne, on récupère une coupe C4 contenant du butadiène et environ 1200 ppm de composés acétyléniques. La composition de cette coupe C4 est présentée dans le tableau 1 ci-dessous. Une partie de cette coupe est réintroduite après condensation et séparation, sous forme de reflux, en tête de colonne, tandis que l'autre partie est récupérée pour un traitement ultérieur, par exemple une extraction par solvant. Le taux de reflux, c'est à dire le rapport entre la partie de la coupe C4 réintroduite en tête de colonne et la totalité de la coupe C4 récupérée en tête de colonne, est de 2,2.

Au niveau du 23$^{\text{ème}}$ plateau (théorique) de la colonne, on soutire latéralement une fraction prélevée comprenant des composés acétyléniques, dont le rapport des concentrations composés acétyléniques sur le butadiène est sensiblement le plus élevé de la colonne, en l'occurrence égale à 0,025 mol/mol. Le débit de soutirage de cette fraction prélevée est égal au débit d'alimentation de la charge.

Cette fraction prélevée est introduite dans un réacteur d'hydrogénation alimenté en hydrogène dans des conditions de pression partielle qui correspondent sensiblement à la stoechiométrie de l'hydrogénation de ces composés acétyléniques. Ce réacteur contient un lit fixe de catalyseur d'hydrogénation fonctionnant en écoulement descendant, c'est à dire par introduction de la charge liquide par le haut du réacteur. Le catalyseur d'hydrogénation est à base de palladium stabilisé par de l'or sur un support d'alumine (0,2 % en poids de palladium et 0,6 % en poids d'or). Le réacteur d'hydrogénation est opéré dans les conditions suivantes :

- Pression absolue : 0,50 MPa
- Température : 35°C
- Vitesse spatiale 4h$^{-1}$
- Débit d'hydrogène : 30 kg/h

Un effluent appauvri en composés acétylénique est recueilli, puis refroidi avant d'être recyclé dans la colonne au niveau du 6$^{\text{ème}}$ plateau théorique. Le refroidissement est réalisé de manière à ce que la température de cet effluent soit approximativement la même que celle du 6$^{\text{ème}}$ plateau théorique.

Cet effluent appauvri en composés acétyléniques contient notamment les composés oléfiniques présents initialement dans la charge, les butadiènes qui n'ont pas été hydrogénés ainsi que les oligomères produits dans la zone d'hydrogénation. Ces composés oligomères, qui sont des produits lourds, sont recueillis en fond de colonne. Une coupe C5 comportant ces composés est prélevée en fond de colonne, dont la composition est présentée dans le tableau 1 ci-dessous. Une partie de cette coupe C5 est introduite dans un rebouilleur et recyclée en bas de colonne.

Dans cet exemple, le niveau d'alimentation de la charge dans la colonne (20ème plateau), le niveau de soutirage latéral de la fraction prélevée (23ème plateau) et le niveau de recyclage de l'effluent hydrogéné (6ème plateau) ont été choisis afin d'obtenir 1200 ppm poids d'acétyléniques dans la coupe C4 tout en minimisant la perte en 1,3-butadiène.

Tableau 1

| Phase Pourcentages massiques | Charge liquide | C4<br>Coupe de tête liquide | C5<br>Coupe de fond liquide |
|---|---|---|---|
| PROPANE | 0,01 | 0,01 | 0,00 |
| PROPADIENE | 0,01 | 0,01 | 0,00 |
| PROPYNE | 0,02 | 0,03 | 0,00 |
| ISOBUTANE | 0,27 | 0,40 | 0,00 |
| ISOBUTENE | 13,66 | 20,31 | 0,01 |
| 1BUTENE | 9,06 | 15,27 | 0,01 |
| 13BUTADIENE | 32,52 | 46,99 | 0,04 |
| NBUTANE | 3,53 | 5,24 | 0,02 |
| TRANS2BUTENE | 4,26 | 7,06 | 0,06 |
| VAC | 0,73 | 0,05 | 0,01 |
| CIS2BUTENE | 2,00 | 3,31 | 0,13 |
| 1BUTYNE | 0,20 | 0,07 | 0,01 |
| 12BUTADIENE | 0,40 | 0,25 | 0,21 |
| ISOPENTANE | 1,67 | 0,11 | 4,87 |
| 2METHYL1BUTENE | 3,21 | 0,15 | 9,46 |
| ISOPRENE | 9,52 | 0,34 | 28,28 |
| PENTANE | 3,333 | 0,09 | 9,94 |
| TRANS2PENTEN | 1,43 | 0,04 | 4,28 |
| 13CYCLOPENTADIENE | 9,76 | 0,21 | 29,27 |
| CYCLOPENTENE | 0,48 | 0,01 | 1,45 |
| 1CIS3PENTADIENE | 3,33 | 0,05 | 10,04 |
| CYCLOPENTANE | 0,60 | 0,01 | 1,82 |
| 15ETHYLCYCLOHEXADIENE | 0,00 | 0,00 | 0,10 |

Le taux de conversion observé en composés vinyl-acétyléniques (VAC) est de 0,95 par calcul selon la relation :

$$1-[(\text{Masse de VAC})_{\text{sortie en tête de colonne}}/(\text{Masse de VAC})_{\text{entrée}}]$$

Les pertes en butadiène représentent la quantité de butadiène qui n'est pas récupérée en tête de colonne, c'est à dire le butadiène qui est hydrogéné en butène au niveau du réacteur d'hydrogénation auquel s'ajoute le butadiène qui est perdu en fond de colonne dans la coupe C5. Les pertes en 1,3-butadiène, l'isomère commercialement intéressant, sont de 2,85 % en poids.

La teneur en C5 en tête de colonne est de 1,00 % en poids.

Exemple 2 (selon l'invention)

Une charge C4+C5 de vapocraquage ayant une composition identique à celle de l'exemple 1 est envoyée dans le dispositif de la Figure 1. Cette charge est introduite dans une colonne de distillation comportant une paroi interne, dans les mêmes conditions de pression et de température que dans l'exemple 1.

La charge est introduite au niveau du 7ème plateau théorique de la partie centrale 4 (4a, 4b) dans laquelle se trouve la paroi interne, ce plateau étant le 20ème plateau théorique de la colonne. La partie 4 comprend 10 plateaux théoriques, la colonne comportant elle même 40 plateaux théoriques. La colonne est maintenue dans les mêmes conditions de pression et de température que dans l'exemple 1.

En tête de colonne on récupère une coupe C4 contenant du butadiène. La composition de cette coupe C4 est présentée dans le tableau 2 ci-dessous. Comme dans l'exemple 1, une partie de cette coupe est réintroduite après condensation et séparation, sous forme de reflux, en tête de colonne, tandis que l'autre partie est récupérée pour un traitement ultérieur. Le taux de reflux par rapport au distillat est de 1,7.

Au niveau du 3ème plateau théorique de la zone A (5) (16ème plateau théorique de la colonne), on soutire latéralement une fraction prélevée riche en composés acétyléniques, dont le rapport des concentrations composés acétyléniques sur le butadiène est égale à 0,030 mol/mol. Le débit de soutirage de cette fraction est de 30 T/h, c'est à dire égal au débit d'alimentation de la charge.

Cette fraction prélevée riche en composés acétyléniques est introduite dans un réacteur d'hydrogénation alimenté en hydrogène dans les mêmes conditions que dans l'exemple 1.

Un effluent appauvri en composés acétyléniques est recueilli, puis refroidi avant d'être recyclé dans la colonne au niveau du 6ème plateau théorique de la section commune (6) en tête de colonne. Comme dans l'exemple 1, le refroidissement est réalisé de manière à ce que la température de cet effluent soit approximativement la même que celle de ce 6ème plateau théorique.

Une coupe C5, dont la composition est présentée dans le tableau 2 ci-dessous, est prélevée en fond de colonne. Une partie de cette coupe C5 est introduite dans un rebouilleur et recyclée en bas de colonne.

Dans cet exemple, le niveau d'alimentation de la charge dans la colonne (20ème plateau théorique), le niveau de soutirage latéral de la fraction prélevée (16ème plateau théorique) et le niveau de recyclage de l'effluent hydrogéné (6ème plateau théorique) ont été choisis afin d'obtenir une perte en 1,3-butadiène de 2,85 % en poids, ce qui correspond à la perte obtenue à l'exemple 1.

Tableau 2

| Phase pourcentages massiques | Charge liquide | C4 Coupe de tête liquide | C5 Coupe de fond liquide |
|---|---|---|---|
| PROPANE | 0,01 | 0,02 | 0,00 |
| PROPADIENE | 0,01 | 0,01 | 0,00 |
| PROPYNE | 0,02 | 0,03 | 0,00 |
| ISOBUTANE | 0,27 | 0,40 | 0,00 |
| ISOBUTENE | 13,66 | 20,44 | 0,03 |
| 1BUTENE | 9,06 | 15,33 | 0,03 |
| 13BUTADIENE | 32,52 | 47,35 | 0,16 |
| NBUTANE | 3,53 | 5,27 | 0,03 |
| TRANS2BUTENE | 4,26 | 7,07 | 0,08 |
| VAC | 0,73 | 0,05 | 0,02 |
| CIS2BUTENE | 2,00 | 3,38 | 0,09 |
| 1BUTYNE | 0,20 | 0,06 | 0,01 |
| 12BUTADIENE | 0,40 | 0,26 | 0,06 |
| ISOPENTANE | 1,67 | 0,11 | 4,80 |
| 2METHYL1BUTENE | 3,21 | 0,08 | 9,48 |
| ISOPRENE | 9,52 | 0,09 | 28,40 |

(suite)

| Phase pourcentages massiques | Charge liquide | C4 Coupe de tête liquide | C5 Coupe de fond liquide |
|---|---|---|---|
| PENTANE | 3,33 | 0,02 | 9,96 |
| TRANS2PENTEN | 1,43 | 0,01 | 4,28 |
| 13CYCLOPENTADIENE | 9,76 | 0,02 | 29,25 |
| CYCLOPENTENE | 0,48 | 0,00 | 1,44 |
| 1CIS3PENTADIENE | 3,33 | 0,00 | 9,99 |
| CYCLOPENTANE | 0,60 | 0,00 | 1,80 |
| 15ETHYLCYCLOHEXADIENE | 0,00 | 0,00 | 0,09 |

Le taux de conversion observé en composés vinyl-acétyléniques (VAC) est de 0,95, calculé selon la même relation présentée dans l'exemple1.

La teneur en composés acétyléniques en tête de colonne est de 1100 ppm pour une perte en 1,3 butadiène identique à l'exemple 1.

La teneur en C5 en tête de colonne est de 0,33 % en poids.

Le rapport C4/C5+ (C4/C5) de l'effluent prélevé est supérieur de plus de 30% à celui de l'exemple 1, indiquant une quantité notablement inférieure de pentadiène, et cyclopentadiène qui sont des précurseurs d'oligomères et polymères. Les quantités d'oligomères et de polymères et traces de C6+ éventuellement présentes dans la charges sont par ailleurs fortement réduites. La durée de vie, ainsi que la sélectivité du catalyseur d'hydrogénation sont ainsi notablement augmentées.

Exemple 3 (selon l'invention)

On reprend l'installation de l'exemple 2 mais au lieu de viser une perte en 1,3-butadiène identique à celle de l'exemple 1, on vise une teneur en composés acétyléniques en tête de colonne identique à celle obtenue dans ce même exemple 1, c'est à dire de 1200 ppm.

Une charge C4+C5 de vapocraquage ayant une composition identique à celle de l'exemple 1 est envoyée dans le dispositif de la Figure 1. Cette charge est introduite dans une colonne de distillation comportant une paroi interne dans les mêmes conditions de pression et de température que dans l'exemple 2.

Comme dans l'exemple 2, la charge est introduite au niveau du 20ème plateau théorique, la colonne comportant elle même 40 plateaux théoriques. La colonne est maintenue dans les mêmes conditions de pression et de température que dans l'exemple 2.

En tête de colonne, on récupère une coupe C4 contenant du butadiène dont la composition est présentée dans le tableau 3 ci-dessous. Le taux de reflux est de 1,8.

Au niveau du 16ème plateau, on soutire latéralement une fraction prélevée, dont le rapport des concentrations composés acétyléniques sur le butadiène est égale à 0,03 mol/mol. Comme dans l'exemple 2, le débit de soutirage de cette fraction est de 30 T/h.

Cette fraction enrichie en composés acétyléniques est introduite dans un réacteur d'hydrogénation alimenté en hydrogène dans les mêmes conditions que dans les exemples 1 et 2.

Un effluent appauvri en composés acétyléniques est recueilli, puis refroidi avant d'être recyclé dans la colonne au niveau du 6ème plateau théorique de la section commune en tête de colonne. Comme dans les exemples 1 et 2, le refroidissement est réalisé de manière à ce que la température de cet effluent soit approximativement la même que celle de ce 6ème plateau théorique.

Une coupe C5 est prélevée en fond de colonne, dont la composition est présentée dans le tableau 3 ci-dessous. Une partie de cette coupe C5 est introduite dans un rebouilleur et recyclée en bas de colonne.

Les compositions en tête et en fond de colonne sont données dans le Tableau 3 ci-dessous.

Tableau 3

| Phase pourcentages massiques | Charge liquide | C4 Coupe de tête liquide | C5 Coupe de fond liquide |
|---|---|---|---|
| PROPANE | 0,01 | 0,02 | 0,00 |

(suite)

| Phase pourcentages massiques | Charge liquide | C4<br>Coupe de tête liquide | C5<br>Coupe de fond liquide |
|---|---|---|---|
| PROPADIENE | 0,01 | 0,01 | 0,00 |
| PROPYNE | 0,02 | 0,03 | 0,00 |
| ISOBUTANE | 0,27 | 0,40 | 0,00 |
| ISOBUTENE | 13,66 | 20,43 | 0,03 |
| 1BUTENE | 9,06 | 15,31 | 0,03 |
| 13BUTADIENE | 32,52 | 47,32 | 0,16 |
| NBUTANE | 3,53 | 5,27 | 0,03 |
| TRANS2BUTENE | 4,26 | 7,07 | 0,08 |
| VAC | 0,73 | 0,05 | 0,02 |
| CIS2BUTENE | 2,00 | 3,38 | 0,08 |
| 1BUTYNE | 0,20 | 0,07 | 0,01 |
| 12BUTADIENE | 0,40 | 0,27 | 0,06 |
| ISOPENTANE | 1,67 | 0,13 | 4,77 |
| 2METHYL1BUTENE | 3,21 | 0,09 | 9,46 |
| ISOPRENE | 9,52 | 0,10 | 28,40 |
| PENTANE | 3,33 | 0,02 | 9,96 |
| TRANS2PENTEN | 1,43 | 0,01 | 4,28 |
| 13CYCLOPENTADIENE | 9,76 | 0,03 | 29,27 |
| CYCLOPENTENE | 0,48 | 0,00 | 1,44 |
| 1CIS3PENTADIENE | 3,33 | 0,00 | 10,00 |
| CYCLOPENTANE | 0,60 | 0,00 | 1,80 |
| 15ETHYLCYCLOHEXADIENE | 0,00 | 0,00 | 0,10 |

Les pertes en 1,3-butadiène sont de 2,75 %. La teneur en C5 en tête de colonne est de 0,38 % en masse. Le rapport C4/C5 est augmenté dans une proportion sensiblement identique à celle de l'exemple 2.

Avec un réacteur d'hydrogénation fonctionnant dans les mêmes conditions de conversion que dans l'art antérieur, l'invention permet :

- de réduire la quantité de précurseurs d'oligomères et polymères et/ou d'oligomères et polymères envoyés à l'hydrogénation, et donc d'améliorer l'activité et typiquement la sélectivité de ce catalyseur, ainsi que sa durée de vie.
- à conversion globale constante, d'augmenter la sélectivité globale du procédé, et
- à sélectivité globale constante, d'augmenter la conversion globale du procédé.


**Revendications**

1. Procédé de traitement d'une charge comprenant des composés acétyléniques, du butadiène, et une fraction C5+ comprenant des composés diéthyléniques et/ou acétyléniques, par exemple du pentadiène et/ou du cyclopentadiène, dans lequel :

    iv) on envoie la charge dans une étape de distillation réalisée dans une colonne de distillation, on récupère en tête de ladite colonne une coupe C4 comportant sensiblement tout le butadiène, on récupère une coupe enrichie en C5+ et on produit une fraction prélevée comprenant des composés acétyléniques,
    v) on traite au moins une partie de ladite fraction prélevée dans au moins une étape d'hydrogénation, et

vi) on recycle un effluent appauvri en composés acétyléniques issu de l'étape d'hydrogénation dans l'étape de distillation,

**caractérisé en ce que** l'étape de distillation comporte :

- une étape initiale de pré-fractionnement de la charge, qui est alimentée dans une zone de pré-fractionnement (4a, 4b, 6, 7) comprise dans une colonne de distillation, pour obtenir à un ou plusieurs niveaux intermédiaires de la colonne au moins un courant intermédiaire à teneur réduite en C5+, et
- au moins une étape de fractionnement par distillation de ce ou ces courant(s) intermédiaire(s), mise en oeuvre dans une zone de fractionnement complémentaire dont une partie A (5) au moins est distincte et non adjacente à la partie B (4b, 7) de la zone de pré-fractionnement constituée par le plateau l'alimentation de la charge et les plateaux inférieurs, pour soutirer ladite fraction prélevée, à partir d'un point de A situé à un niveau de la colonne plus élevé que le point d'alimentation de la charge et pour lequel le rapport molaire [C4 / C5+] est plus élevé que celui de la charge,

et **en ce que** le recyclage dudit effluent appauvri en composés acétyléniques issu de l'étape d'hydrogénation est réalisé à un niveau de la colonne de distillation situé au dessus du niveau de soutirage de ladite fraction prélevée, et au dessus desdites parties A et B.

2. Procédé selon la revendication 1, dans lequel ladite partie A est constituée par un tronçon de ladite colonne situé au dessus de l'alimentation de la charge.

3. Procédé la revendication 1, dans lequel la colonne de distillation comporte une partition disposée de manière à séparer ladite partie A de la zone de fractionnement complémentaire, de ladite zone B, et en ce que la zone de pré-fractionnement (4a, 4b, 6, 7) et la zone de fractionnement complémentaire (5, 6, 7) comprennent au moins une section commune (6, 7).

4. Procédé selon la revendication 3, dans lequel la partition est disposée dans une partie centrale de la colonne, de manière à ménager une section commune (6) en tête de colonne et une section commune (7) en fond de colonne,

- la coupe C4 comportant sensiblement tout le butadiène est récupérée dans la section commune (6) en tête de colonne,
- la coupe enrichie en C5+ est récupérée dans la section commune (7) en fond de colonne, et
- la fraction prélevée est produite dans ladite partie A (5) de la zone de fractionnement complémentaire, au niveau de la partie centrale de la colonne.

5. Procédé selon l'une des revendications précédentes, dans lequel ladite fraction prélevée est récupérée par soutirage latéral dans la moitié supérieure de ladite partie A (5) de la zone de fractionnement complémentaire.

6. Procédé selon l'une des revendications 3 et 4, dans lequel ledit courant intermédiaire est directement envoyé sur un lit de catalyseur en présence d'hydrogène localisé dans ladite partie A de la zone de fractionnement complémentaire, au-dessous du plateau théorique supérieur de ladite partie A.

7. Procédé selon l'une des revendications 3 à 6, dans lequel l'effluent appauvri en composés acétyléniques est recyclé dans la section commune en tête de colonne,

8. Dispositif de traitement d'une charge comprenant des composés acétyléniques, du butadiène, et une fraction C5+ comprenant des composés diéthyléniques et/ou acétyléniques comprenant :

- une colonne de distillation (2) pourvue de moyens (1) d'alimentation de la charge, de moyens (24, 26) de récupération en tête de colonne d'une coupe C4 comportant sensiblement tout le butadiène, et de moyens (31, 35) de récupération d'une coupe enrichie en C5+, ladite colonne de distillation permettant également la production d'une fraction prélevée comprenant des composés acétyléniques,
dans lequel la colonne de distillation comporte :

a) une zone de pré-fractionnement, (4a, 4b, 6, 7) reliée aux moyens d'alimentation de la charge, produisant à au moins un niveau intermédiaire de la colonne au moins un courant intermédiaire comprenant des composés acétyléniques et
b) des moyens de transfert d'au moins un courant intermédiaire à teneur réduite en C5+, produit dans la zone de pré-fractionnement, vers au moins une zone de fractionnement complémentaire (5, 6, 7) dont une partie A (5) au moins est distincte et non adjacente à la partie B (4b, 7) de la zone de pré-fractionnement constituée par le plateau l'alimentation de la charge et les plateaux inférieurs, la partie A comprenant également des moyens de soutirage de ladite fraction prélevée à partir d'un point de A pour lequel le ratio molaire [C4 / C5+] est plus élevé que celui de la charge, ces moyens de soutirage étant disposés à un niveau supérieur à celui des moyens d'alimentation de la charge, et étant reliés aux moyens d'hydrogénation,

- des moyens d'hydrogénation (12, 13) de la fraction prélevée,
- et des moyens de recyclage (17) dans la colonne de distillation d'un effluent appauvri en composés acétyléniques provenant des moyens d'hydrogénation, ce recyclage étant réalisé à un niveau de la colonne de distillation situé au dessus du niveau de soutirage de ladite fraction prélevée, et au dessus desdites parties A et B.

## Claims

1. A process for treating a feed comprising acetylenic compounds, butadiene and a C5+ fraction comprising diethylenic and/or acetylenic compounds, for example pentadiene and/or cyclopentadiene, in which:

   i) the feed is sent to a step for distillation carried out in a distillation column, a C4 cut that comprises substantially all of the butadiene is recovered from the head of said column, a cut that is enriched in C5+ is recovered and a drawn fraction comprising acetylenic compounds is produced;
   ii) at least a portion of said drawn fraction is treated in at least one hydrogenation step; and
   iii) an effluent that is depleted in acetylenic compounds from the hydrogenation step is recycled to the distillation step;

   **characterized in that** the distillation step comprises:

   • an initial step for pre-fractionation of the feed, which latter is supplied to a pre-fractionation zone (4a, 4b, 6, 7) included in a distillation column, to obtain at least one intermediate stream with a reduced C5+ content at one or more intermediate levels of the column; and
   • at least one step for fractionation by distillation of the intermediate stream or streams, carried out in a complementary fractionation zone at least a portion A (5) of which is distinct from and not adjacent to the portion B (4b, 7) of the pre-fractionation zone constituted by the feed supply plate and the lower plates, to withdraw the drawn fraction from a point in A located at a level in the column that is higher than the feed supply point and for which the mole ratio [C4/C5+] is higher than that of the feed;

   and **in that** recycling said effluent which is depleted in acetylenic compounds from the hydrogenation step is carried out to a level in the distillation column located above the level from which said drawn fraction is withdrawn and above said portions A and B.

2. A process according to claim 1, in which said portion A is constituted by a section of said column located above the feed supply.

3. A process according to claim 1, in which the distillation column comprises a partition disposed so as to separate said portion A of the complementary fractionation zone from said zone B, and in that the pre-fractionation zone (4a, 4b, 6, 7) and the complementary fractionation zone (5, 6, 7) comprise at least one common section (6, 7).

4. A process according to claim 3, in which the partition is disposed in a central portion of the column to produce a common section (6) at the column head and a common section (7) at the column bottom,

   • the C4 cut comprising substantially all of the butadiene is recovered from the common section (6) at the column head;
   • the C5+ enriched cut is recovered from the common section (7) at the column bottom; and
   • the drawn fraction is produced in said portion A (5) of the complementary fractionation zone, at the central portion of the column.

5. A process according to one of the preceding claims, in which said drawn fraction is recovered by withdrawal as a side stream from the upper half of said portion A (5) of the complementary fractionation zone.

**6.** A process according to claim 3 or claim 4, in which said intermediate stream is sent directly to a bed of catalyst in the presence of hydrogen located in said portion A of the complementary fractionation zone below the upper theoretical plate of said portion A.

**7.** A process according to one of claims 3 to 6, in which the effluent depleted in acetylenic compounds is recycled to the common section at the column head.

**8.** An apparatus for treating a feed comprising acetylenic compounds, butadiene and a C5+ fraction comprising diethylenic and/or acetylenic compounds, comprising:

> • a distillation column (2) provided with means (1) for supplying feed, means (24, 26) for recovering a C4 cut comprising substantially all of the butadiene from the column head, and means (31, 35) for recovering a cut enriched in C5+, said distillation column also allowing production of a drawn fraction comprising acetylenic compounds;
> in which the distillation column comprises:

>> a) a pre-fractionation zone (4a, 4b, 6, 7) connected to means for supplying feed, producing, at at least one intermediate level of the column, at least one intermediate stream comprising acetylenic compounds; and
>> b) means for transferring at least one intermediate stream with a reduced C5+ content produced in the pre-fractionation zone to at least one complementary fractionation zone (5, 6, 7) at least a portion A (5) of which is distinct from and not adjacent to a portion B (4b, 7) of the pre-fractionation zone constituted by the plate supplying the feed and the lower plates, the portion A also comprising means for withdrawing said drawn fraction from a point in A at which the [C4/C5+] mole ratio is higher than that of the feed, said withdrawal means being disposed at a level that is higher than that of the feed supply means, and being connected to hydrogenation means;

> • means (12, 13) for hydrogenating the drawn fraction;
> • and means (17) for recycling an effluent which is depleted in acetylenic compounds deriving from the hydrogenation means to the distillation column, said recycle being carried out to a level in the distillation column located above the level from which said drawn fraction is withdrawn, and above said portions A and B.


**Patentansprüche**

**1.** Verfahren zur Behandlung einer Beschickung, die acetylenische Verbindungen, Butadien und eine [C5+]-Fraktion umfasst, die diethylenische und/oder acetylenische Verbindungen umfasst, zum Beispiel Pentadien und/oder Cyclopentadien, worin: iv) die Beschickung in einen Schritt zur Destillation geschickt wird, der in einer Destillationssäule ausgeführt wird, am Kopf der Säule ein C4-Schnitt zurückgewonnen wird, der im Wesentlichen das gesamte Butadien umfasst, ein Schnitt zurückgewonnen wird, der mit C5+ angereichert ist, und eine abgezogene Fraktion, die die acetylenischen Verbindungen umfasst, produziert wird,

> v) mindestens ein Teil der abgezogenen Fraktion in mindestens einem Schritt zur Hydrierung behandelt wird, und
> vi) ein Abfluss, der an acetylenischen Verbindungen verarmt ist, der aus dem Schritt zur Hydrierung stammt, zum Schritt zur Destillation recycelt wird,
> **dadurch gekennzeichnet, dass** der Schritt zur Destillation Folgendes umfasst:

>> - einen ersten Schritt der Vorfraktionierung der Beschickung, die in eine Zone zur Vorfraktionierung (4a, 4b, 6, 7), die in einer Destillationssäule enthalten ist, eingespeist wird, um in einer oder mehreren Zwischenebenen der Säule mindestens einen Zwischenlauf mit reduziertem Gehalt an C5+ zu erhalten, und
>> - mindestens einen Schritt der Fraktionierung durch Destillation des Zwischenstroms oder der Zwischenströme, der in einer zusätzlichen Fraktionierungszone durchgeführt wird, deren mindestens einer Teil A (5) verschieden von und nicht benachbart zu Teil B (4b, 7) der Vorfraktionierungszone ist, die durch die Platte zur Einspeisung der Beschickung und die unteren Platten gebildet wird, um die abgezogene Fraktion von einem Punkt in A aus abzuziehen, der auf einer Ebene der Säule liegt, die höher liegt als der Punkt zur Einspeisung der Beschickung und für den das [C4/C5+]-Molverhältnis höher ist als das der Beschickung, und dadurch, dass das Recycling des Abflusses, der an acetylenischen Verbindungen verarmt ist, der aus dem Schritt der Hydrierung stammt, zu einer Ebene der Destillationssäule ausgeführt wird, die oberhalb der Ebene zum Entnehmen der abgezogenen Fraktion und oberhalb der Teile A und B liegt.

2. Verfahren nach Anspruch 1, worin der Teil A aus einem Stück der Säule gebildet wird, das oberhalb der Beschickungseinspeisung liegt.

3. Verfahren nach Anspruch 1, worin die Destillationssäule ein Segment umfasst, das angeordnet ist, um den Teil A der zusätzlichen Fraktionierungszone von der Zone B zu trennen, und dadurch, dass die Vorfraktionierungszone (4a, 4b, 6, 7) und die zusätzliche Fraktionierungszone (5, 6, 7) mindestens einen gemeinsamen Abschnitt (6, 7) umfassen.

4. Verfahren nach Anspruch 3, worin das Segment in einem mittleren Teil der Säule angeordnet ist, um einen gemeinsamen Abschnitt (6) am Kopf der Säule und einem gemeinsamen Abschnitt (7) am Boden der Säule zu bilden,

 - wobei der C4-Schnitt, der im Wesentlichen das gesamte Butadien umfasst, in dem gemeinsamen Abschnitt (6) am Kopf der Säule zurückgewonnen wird,
 - wobei der Schnitt, der mit C5+ angereichert ist, in dem gemeinsamen Abschnitt (7) am Boden der Säule zurückgewonnen wird, und die abgezogene Fraktion im Teil A (5) der zusätzlichen Fraktionierungszone, auf der Ebene des mittleren Teils der Säule produziert wird.

5. Verfahren nach einem der vorhergehenden Ansprüche, worin die abgezogene Fraktion als Seitenstrom aus der oberen Hälfte des Teils A (5) der zusätzlichen Fraktionierungszone zurückgewonnen wird.

6. Verfahren nach einem der Ansprüche 3 und 4, worin der Zwischenstrom in Gegenwart von Wasserstoff direkt auf ein Katalysatorbett geschickt wird, das in dem Teil A der zusätzlichen Fraktionierungszone unterhalb der theoretischen oberen Platte des Teils A angeordnet ist.

7. Verfahren nach einem der Ansprüche 3 bis 6, worin der Abfluss, der an acetylenischen Verbindungen verarmt ist, zum gemeinsamen Abschnitt am Kopf der Säule recycelt wird.

8. Vorrichtung zur Behandlung einer Beschickung, die acetylenische Verbindungen, Butadien und eine [C5+]-Fraktion umfasst, die diethylenische und/oder acetylenische Verbindungen umfasst, umfassend:

 - eine Destillationssäule (2), die mit Mitteln (1) zur Einspeisung der Beschickung, Mitteln (24, 26) zur Rückgewinnung eines C4-Schnitts, der im Wesentlichen das gesamte Butadien umfasst, und Mitteln (31, 35) zur Rückgewinnung eines Schnitts, der mit C5+ angereichert ist, ausgestattet ist, wobei die Destillationssäule auch die Produktion einer abgezogenen Fraktion ermöglicht, die acetylenische Verbindungen umfasst,
 worin die Destillationssäule Folgendes umfasst:
 - eine Vorfraktionierungszone (4a, 4b, 6, 7), die mit den Mitteln zur Einspeisung der Beschickung verbunden ist, die auf mindestens einer Zwischenebene der Säule mindestens einen Zwischenstrom produziert, der acetylenische Verbindungen umfasst, und
 - Mittel zur Übertragung mindestens eines Zwischenstroms mit reduziertem Gehalt an C5+, der in der Vorfraktionierungszone produziert wird, auf mindestens eine zusätzliche Fraktionierungszone (5, 6, 7), deren mindestens einer Teil A (5) verschieden ist von und nicht benachbart ist zum Teil B (4b, 7) der Vorfraktionierungszone, die durch die Platte zur Einspeisung der Beschickung und die unteren Platten gebildet wird, wobei der Teil A auch Mittel zum Entnehmen der abgezogenen Fraktion von einem Punkt von A umfasst, für den das [C4/C5+]-Molverhältnis höher ist als das der Beschickung, wobei diese Mittel zum Abziehen auf einer Ebene angeordnet sind, die oberhalb derjenigen der Mittel zur Einspeisung der Beschickung liegt, und die mit Mitteln zur Hydrierung verbunden sind,
 - Mittel zur Hydrierung (12, 13) der abgezogenen Fraktion,
 - und Mittel zum Recyceln (17) eines Abflusses, der an acetylenischen Verbindungen verarmt ist, der aus Mittel zur Hydrierung stammt, in der Destillationssäule, wobei dieses Recyceln auf einer Ebene der Destillationssäule ausgeführt wird, die oberhalb der Ebene zum Entnehmen der abgezogenen Fraktion und oberhalb der Teile A und B liegt.

Figure 1

Figure 2

**RÉFÉRENCES CITÉES DANS LA DESCRIPTION**

**Documents brevets cités dans la description**

- EP 1217060 A
- EP 1217060 A1